(19) Europäisches Patentamt
European Patent Office
Office européen des brevets

(11) EP 1 731 564 B1

(12) # EUROPEAN PATENT SPECIFICATION

(45) Date of publication and mention of the grant of the patent:
**10.03.2010 Bulletin 2010/10**

(51) Int Cl.:
*C08L 23/02* (2006.01)
*C08L 23/08* (2006.01)
*B32B 27/32* (2006.01)
*C08K 5/10* (2006.01)
*H01B 3/00* (2006.01)

(21) Application number: **05012356.1**

(22) Date of filing: **08.06.2005**

(54) **Water tree retarding composition**

Zusammensetzung zum Schutz gegen Wasserbäumchen

mélange retardant l'apparition des traces de souillures par humidite

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**13.12.2006 Bulletin 2006/50**

(73) Proprietor: **Borealis Technology Oy**
**06101 Porvoo (FI)**

(72) Inventors:
- **Smedberg, Annika**
**471 61 Myggenäs (SE)**
- **Nylander, Perry**
**412 61 Göteborg (SE)**

(74) Representative: **Kador & Partner**
**Corneliusstrasse 15**
**80469 München (DE)**

(56) References cited:
**EP-A- 0 296 355**
**WO-A-94/13707**
**WO-A-99/31675**
**US-A- 5 539 075**

EP 1 731 564 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a polymer composition with improved wet ageing properties, especially improved water tree resistance properties, and improved crosslinking properties, and a multi-layered article such as a power cable comprising the polymer composition.

A typical electric power cable generally comprises one or more conductors in a cable core that is surrounded by several layers of polymeric materials including an inner semiconducting layer, followed by an insulating layer, and then an outer semiconducting layer. These layers are normally crosslinked. To these layers, further layers may be added, such as a metallic tape or wire shield, and finally a jacketing layer. The layers of the cable are based on different types of polymers. Nowadays, low density polyethylene, crosslinked by adding peroxide compounds, is the predominant cable insulation material.

A limitation of polyolefins is their tendency to be exposed, in the presence of water and under the action of strong electric fields, to the formation of bush-shaped defects, so-called water trees, which can lead to lower breakdown strength and possibly electric failure. This tendency is strongly affected by the presence of inhomogeneities, microcavities and impurities in the material. Water treeing is a phenomenon that has been studied carefully since the 1970's.

In electrically strained polymer materials, subjected to the presence of water, processes can occur which are characterized as "water treeing". It is known that insulated cables suffer from shortened service life when installed in an environment where the polymer is exposed to water, e.g. under ground or at locations of high humidity.

The appearance of water tree structures are manifold. In principle, it is possible to differentiate between two types:

- "Vented trees" which have their starting point on the surface of the material extending into the insulation material and

- "Bow-tie trees" which are formed within the insulation material.

The water tree structure constitutes local damage leading to reduced dielectric strength.

Polyethylene is generally used without a filler as an electrical insulation material as it has good dielectric properties, especially high breakdown strength and low power factor. However, polyethylene homopolymers are prone to "water-treeing" in the presence of water.

Many solutions have been proposed for increasing the resistance of insulating materials to degradation by water-treeing. One solution involves the addition of polyethylene glycol, as water-tree growth inhibitor to a low density polyethylene such as described in US 4,305,849 and US 4,812,505. Furthermore, the invention WO 99/31675 discloses a combination of specific glycerol fatty acid esters and polyethylene glycols as additives to polyethylene for improving water-tree resistance. Another solution is presented in WO 85/05216 which describes copolymer blends. The ethylene polymers do not have any significant amounts of carbon-carbon double bonds.

WO 34/13707 describes unsaturated ethylene polymers prepared by low-pressure polymerisation and having certain amounts of carbon-carbon double bonds.

Moreover, the compositions used most in this technical field are crosslinked. Crosslinking can be effected by adding free-radical forming agents like peroxides to the polymeric material prior to or during extrusion, for example cable extrusion. The free-radical forming agent should preferably remain stable during extrusion, performed at a temperature low enough to minimize the early decomposition of the peroxide but high enough to obtain proper melting and homogenisation. Furthermore, the crosslinking agent should decompose in a subsequent crosslinking step at elevated temperature. If e.g. a significant amount of peroxide already decomposes in the extruder, thereby initiating premature crosslinking, this will result in the formation of so-called "scorch", i.e. inhomogeneity, surface uneveness and possibly discolouration in the different layers of the resultant cable. Thus, any significant decomposition of free-radical forming agents during extrusion should be avoided. On the other hand, thermal treatment at the elevated temperature of the extruded polyolefin layer should result in high crosslinking speed and high crosslinking efficiency.

Despite the compositions according to the prior art and the resistance to water-treeing that they afford, a solution that could combine water-tree retardancy in combination with high productivity is needed. The limitations today are partly due to the curing kinetics. Solutions that could enable longer running times, crosslink faster or that could be crosslinked under milder crosslinking conditions would all contribute to a high productivity at the cable manufacturing step. However, increased productivity must not be reached on the expense of resistance to water treeing. The expected life time of an installed cable is more than 30 years. If a cable has an electrical breakdown the affected part of the cable has to be replaced. The costs of the cable are low compared to costs arising by a repair of the damaged part of the cable. Therefore it is of interest to find solutions that offer better water treeing properties that then prolong the service life of the cable if it is exposed to wet or humid environments.

The object of the present invention is therefore to provide a new polymer composition that offers a combination of increased productivity through enhanced crosslinking properties in combination with improved water-tree resistance.

Another object is to reduce the formation of scorch.

These objects are solved by providing a crosslinkable polymer composition comprising

(i) an unsaturated polyolefin having a total amount of carbon-carbon double bonds/1000 carbon atoms of more than 0.37,

(ii) at least one ether and/or ester group containing additive selected from the group consisting of polyethylene glycol, a glycerol ester compound, polypropylene glycol, an amido group containing fatty acid ester, ethoxylated and/or propoxylated pentaerythritol, an alpha-tocopherol ester, an ethoxylated and/or propoxylated fatty acid, and derivatives thereof.

Description of component (i)

When used in combination with the unsaturated polyolefin, the term "total amount of carbon-carbon double bonds" refers to those double bonds originating from vinyl groups, vinylidene groups and *trans*-vinylene groups. The amount of each type of double bond is measured as indicated in the experimental part.

The incorporation of the total amount of carbon-carbon double bonds according to the present invention within the polyolefin component enables to accomplish improved crosslinking properties.

In a preferred embodiment, the total amount of carbon-carbon double bonds is at least 0.40/1000 C-atoms. In other preferred embodiments, the total amount of carbon-carbon double bonds is at least 0.45, at least 0.50, at least 0.55, at least 0.60, at least 0.65, at least 0.70, at least 0.75 or at least 0.80/1000 C-atoms.

The total amount of vinyl groups is preferably higher than 0.11/1000 carbon atoms. In other preferred embodiments, it is at least 0.15, at least 0.20, at least 0.25, at least 0.30, at least 0.35, at least 0.40, at least 0.45, at least 0.50, at least 0.55, at least 0.60, at least 0.65, at least 0.70, at least 0.75 or at least 0.80 vinyl groups/1000 carbon atoms. Of course, since a vinyl group is a specific type of carbon-carbon double bond, the total amount of vinyl groups for a given unsaturated polyolefin does not exceed its total amount of double bonds.

Two types of vinyl groups can be differentiated. One type of vinyl group is generated by the polymerisation process (e.g. via a β-scission reaction of a secondary radical) or results from the use of chain transfer agents introducing vinyl groups. Another type of vinyl group may originate from a polyunsaturated comonomer used for the preparation of the unsaturated polyolefin, as will be described later in greater detail.

Preferably, the amount of vinyl groups originating from the polyunsaturated comonomer is at least 0.03/1000 carbon atoms. In other preferred embodiments, the amount of vinyl groups originating from the polyunsaturated comonomer is at 0.06, at least 0.09, at least 0.12, at least 0.15, at least 0.18, at least 0.21, at least 0.25, at least 0.30, at least 0.35 or at least 0.40/1000 carbon atoms.

In addition to the vinyl groups originating from the polyunsaturated comonomer, the total amount of vinyl groups may further comprise vinyl groups originating from a chain transfer agent which introduces vinyl groups, such as propylene.

Preferred unsaturated polyolefins of the present invention such as unsaturated polyethylene may have densities higher than 0.860, 0.880, 0.900, 0.910, 0.915, 0.917, or 0.920 $g/cm^3$.

Preferred unsaturated polyolefins of the present invention such as unsaturated polyethylene may have densities not higher than 0.930, 0.935, 0.940, 0.945, 0.950, 0.955, or 0.960 $g/cm^3$.

The polyolefin can be unimodal or multimodal, e.g. bimodal.

In the present invention, the unsaturated polyolefin is preferably an unsaturated polyethylene or an unsaturated polypropylene. Most preferably, the unsaturated polyolefin is an unsaturated polyethylene. Unsaturated polyethylene of low density is preferred. In a preferred embodiment, the unsaturated polyethylene contains at least 60 wt-% ethylene monomer units. In other preferred embodiments, the unsaturated polyethylene contains at least 70 wt-%, at least 80 wt-% or at least 90 wt-% ethylene monomer units.

Preferably, the unsaturated polyolefin is prepared by copolymerising at least one olefin monomer with at least one polyunsaturated comonomer. In a preferred embodiment, the polyunsaturated comonomer consists of a straight carbon chain with at least 8 carbon atoms and at least 4 carbon atoms between the non-conjugated double bonds, of which at least one is terminal.

Ethylene and propylene are preferred olefin monomers. Most preferably, ethylene is used as the olefin monomer. As a comonomer, a diene compound is preferred, e.g. 1,7-octadiene, 1,9-decadiene, 1,11-dodecadiene, 1,13-tetradecadiene, or mixtures thereof. Furthermore, dienes like 7-methyl-1,6-octadiene, 9-methyl-1,8-decadiene, or mixtures thereof can be mentioned.

Siloxanes having the following formula:

$$CH_2=CH-[Si(CH_3)_2-O]_n-Si(CH_3)_2-CH=CH_2,$$

wherein n=1 or higher can also be used as a polyunsaturated comonomer. As an example, divinylsiloxanes, e.g. $\alpha,\omega$-divinylsiloxane, can be mentioned.

In addition to the polyunsaturated comonomer, further comonomers can optionally be used. Such optional comonomers can be selected from $C_3$-$C_{20}$ alpha-olefins such as propylene, 1-butene, 1-hexene and 1-nonene.

It is also possible to use polar comonomers, optionally in combination with the $C_3$-$C_{20}$ comonomer(s). Preferably, as polar monomer units, compounds containing hydroxyl groups, alkoxy groups, carbonyl groups, carboxyl groups and ester groups are used.

Still more preferably, the monomer units are selected from the group of alkyl acrylates, alkyl methacrylates, and vinyl acetates or mixtures therefrom. Further preferred, the comonomers are selected from $C_1$- to $C_6$-alkyl acrylates, $C_1$- to $C_6$-alkyl methacrylates, and vinyl acetate. Still more preferably, the polar copolymer comprises a copolymer of ethylene with $C_1$- to $C_4$-alkyl, such as methyl, ethyl, propyl or butyl acrylates or vinyl acetate.

For example, polar monomer units may be selected from the group of alkylesters of (meth)acrylic acid, such as methyl, ethyl and butyl(meth)acrylate and vinylacetate or mixtures therefrom. The acrylate type of polar comonomer is preferred over acetates due to their better resistance to thermal degradation at high temperatures.

The polar comonomer units can either be incorporated via a copolymerisation of ethylene with a small amount of polar comonomer units or they could be incorporated by blending in a polar copolymer to the composition contributing with the polar comonomer units.

Preferably, the amount of units derived from the polar comonomer is less than 150 micromoles, more preferably less than 125 micromoles, even more preferably less than 100 micromoles, even more preferably less than 85 micromoles and most preferably less than 70 micromoles per gram of unsaturated polyolefin.

The unsaturated polyolefin can be produced by any conventional polymerisation process. Preferably, it is produced by radical polymerisation, such as high pressure radical polymerisation. High pressure polymerisation can be effected in a tubular reactor or an autoclave reactor.

Preferably, it is a tubular reactor. Further details about high pressure radical polymerisation are given in WO93/08222, which is herewith incorporated by reference. However, the unsaturated polyolefin can also be prepared by other types of polymerisation process such as coordination polymerisation, e.g. in a low pressure process using any type of supported and non-supported polymerization catalyst. As an example, multi-site including dual site and single site catalyst systems such as Ziegler-Natta, chromium, metallocenes of transition metal compounds, non-metallocenes of late transition metals, said transition and later transition metal compounds belonging to group 3-10 of the periodic table (IUPAC 1989). The coordination polymerization processes and the mentioned catalysts are well-known in the field and may be commercially available or produced according to known literature.

When preparing the unsaturated polyolefin such as an unsaturated polyethylene in a high pressure process, the polymerisation is generally performed at pressures in the range of 1200 to 3500 bar and at temperatures in the range of 150 to 350 °C.

Description of component (ii)

According to the present invention, the crosslinkable polymer composition further comprises at least one ether and/or ester group containing additive selected from the group consisting of polyethylene glycol, a glycerol ester compound, polypropylene glycol, an amido group containing fatty acid ester, ethoxylated and/or propoxylated pentaerythritol, an alpha-tocopherol ester, an ethoxylated and/or propoxylated fatty acid, and derivatives thereof.

Within the context of the present invention, it is sufficient to add one of these additives to the unsaturated polyolefin. However, it is also possible to add any combination of these additives to the unsaturated polyolefin. As an example, polyethylene glycol and the glycerol ester compound are a preferred combination of additives. Other preferred combinations of additives include polyethylene glycol with an amido group containing fatty acid ester, polyethylene glycol with polypropylene glycol, in particular a propylene glycol block copolymer consisting of polypropylene glycol and polyethylene glycol of the formula $HO(CH_2CH_2O)_x(CH(CH_3)CH_2)_y(CH_2H_2O)_zH$, polyethylene glycol with an ethoxylated and/or propoxylated fatty acid, a glycerolester compound with an ethoxylated and/or propoxylated pentaerythritol and an alpha-tocopherol ester such as alpha-tocopherol acetate, or a glycerol ester compound with a polypropylene glycol, in particular a propylene glycol block copolymer consisting of polypropylene glycol and polyethylene glycol of the formula $HO(CH_2CH_2O)_x(CH(CH_3)CH_2)_y(CH_2H_2O)_zH$.

Preferably, the crosslinkable polymer composition comprises the ether and/or ester group containing additive (s) in an amount of 0.05 wt% to 7 wt%.

In a preferred embodiment, the polyethylene glycol has a number average molecular weight of 1000 to 50000. More preferably, it is 4000 to 30000.

Preferably, the polyethylene glycol is present in an amount of 0.05 to 5 wt%, more preferably 0.05 to 1 wt%, based on the weight of the crosslinkable polymer composition.

Within the context of the present invention, a glycerol ester compound is an ester obtained by esterification of glycerol or a polyglycerol with at least one carboxylic acid. In a preferred embodiment, the glycerol ester compound has a formula (I) of

$$R^1O\ [C_3H_5(OR^2)O]_nR^3 \qquad (I)$$

where n≥1, preferably n=1-25, $R^1$, $R^2$ and $R^3$ are the same or different, preferably designate hydrogen or the residue of a carboxylic acid with 8 to 24 carbon atoms in the molecule. The compound of the general formula (I) is a monomer or polyglycerol ester, where at least one OH group forms an ester with a carboxylic acid with 8 to 24 carbon atoms. Preferably the compound of formula (I) is a monoester, i.e. it contains one rest of a carboxylic acid with 8 to 24 carbon atoms per molecule. Further, the ester forming carboxylic acid, preferably forms the ester with a primary hydroxylic group of the glycerol compound. The compound of formula (I) may include 1 to 25, preferably 1 to 20, more preferably 1 to 15, most preferably 3 to 8 glycerol units, i.e. n in the formula (I) is preferably 1 to 25, 1 to 20, 1 to 15. or 3 to 8.

When $R^1$, $R^2$ and $R^3$ in Formula (I) do not designate hydrogen they designate the residue of a carboxylic acid with 8 to 24 carbon atoms. These carboxylic acids may be saturated or unsaturated and branched or unbranched. Non-limiting examples of such carboxylic acids are lauric acid, myristic acid, palmitic acid, stearic acid, oleic acid, linolenic acid and linoleic acid. When the carboxylic residue is unsaturated, the unsaturation may be utilized for binding the compound of formula (I) to the polyolefin of the composition and thus effectively prevent migration of the compound from the composition. In formula (I), $R^1$, $R^2$, $R^3$ may designate the same carboxylic acid residue, such as stearoyl or different carboxylic acid residues such as stearoyl and oleoyl.

Preferably, the glycerol ester compound is present in an amount of 0.05 to 2 wt%, based on the weight of the crosslinkable polymer composition.

When the glycerol ester compound as well as the polyethylene glycol are added, the combined amount thereof is preferably in the range of 0.1 to 2 wt%, based on the weight of the crosslinkable polymer composition.

The polypropylene glycol is a propylene glycol polymer or propylene glycol copolymer, preferably a propylene glycol copolymer, more preferably a propylene glycol block copolymer and most preferably a propylene glycol block copolymer comprising propylene glycol and ethylene glycol. Most preferably, the propylene glycol block copolymer is of the formula

$$HO(CH_2CH_2O)_x(CH(CH_3)CH_2O)_y(CH_2CH_2O)_zH$$

or

$$HO(CH(CH_3)CH_2O)_x(CH_2CH_2O)_y(CH(CH_3)CH_2O)_zH.$$

Additionally, it is preferred that the propylene glycol polymer as defined above, preferably propylene glycol block copolymer comprising ethylene glycol, has a molecular weight from 2500 to 40000 g/mol, more preferably from 2800 to 35000 g/mol, still more preferably from 3100 to 33000 g/mol and most preferably the molecular weight of the polypropylene glycol is about 10000 g/mol. Additionally, it is preferred that the amount calculated of the ethylene glycol units, in the total propylene glycol, preferably propylene glycol block copolymer comprising ethylene glycol, ranges from 40 to 60 wt%, more preferred from 45 to 55 wt%, more preferred from 48 to 52 wt% and the most preferred value is about 50 wt%.

Also a pentaerythritol can be the base for these block structures comprising propylene glycol and ethylene glycol units as described above.

The amido group containing fatty acid ester is preferably of the following general formula

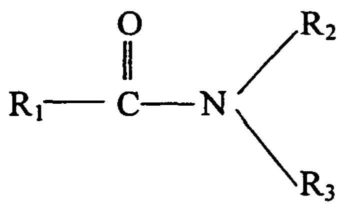

whereby $R_1$ is the residue of a fatty acid which is an aliphatic saturated hydrocarbon chain with preferably 1 to 30 carbon atoms, more preferably 1 to 20 carbon atoms. It is additionally preferred that the aliphatic saturated hydrocarbon chain is non-branched. $R_2$ and $R_3$ can be every organic residue but it is preferred that $R_2$ or $R_3$ is an aliphatic saturated

hydrocarbon chain, preferably a non-branched aliphatic saturated alcohol, still more preferably a non-branched aliphatic saturated alcohol with 1 to 30 carbon atoms and most preferred $R_2$ or $R_3$ is ethanol.

Furthermore, it is preferred that $R_2$ or $R_3$ is polyoxyethylene or polyoxypropylene, most preferred polyoxyethylene or polyoxypropylene comprising 6 to 12 ether bonds. It is still more preferred that $R_2$ is an alcohol as defined above and $R_3$ is polyoxyethylene or polyoxypropylene as defined above.

The most preferred amido group containing fatty acid esters are polyethoxyethylene-mono-ethanolamide of alkyl fatty acids (CAS 157707-44-3) and therefrom the most preferred components are polyethoxy ethylene-monoethanol amide coconut oil fatty acids (CAS 68425-44-5).

The ethoxylated and/or propoxylated fatty acid is a fatty acid as defined above which comprises polyoxyethylene and/or polyoxypropylene residues as defined above on the ester group. It is preferred that ethoxylated and/or propoxylated fatty acids are oleic acid propylene-ethylene aducts, more preferred with 6 to 12 ether bonds per chain.

A preferred ethoxylated fatty acid is an ethylene oxide condensation product of a saturated fatty acid with a densitiy (50°C) of approximately 1000 kg/m$^3$, melting range of 34 to 42°C and with a viscosity (50°C) of about 50 mPa x s (Akzo Nobel, Besal Fintex 10 as on the datasheet issued 21.03.2000).

The ethoxylated and/or propoxylated pentaerythritol can be a mixture of an ethoxylated pentaerythritol and a propoxylated pentaerythritol or can be a compound which is ethoxylated and propoxylated within the same molecule. Preferably, it is of the formula $C(CH_2O(CH_2CH_2O)_nH)_4$ whereby an n is 30 to 500, more preferably 30 to 300, more preferred 50 to 200 and most preferred 100-200. Moreover, it is preferred that the ethoxylated or propoxylated or a mix ethoxylated/propoxylated pentaerythritol component, preferably of the formula $C(CH_2O(CH_2CH_2O)_nH)_4$, has a molecular weight of 7000 to 30000 g/mol, more preferably from 18000 to 25000 g/mol and most preferred about 20000 g/mol. Moreover, it is preferred that the ethoxylated pentaerythritol component, preferably of the formula $C(CH_2O(CH_2CH_2O)_nH)_4$, has a melting point measured according IS03016 of 50 to 70°C, more preferred of 55 to 60°C and most preferred about 60°C. The density measured according DIN 51562 (70°C) ranges for the ethoxylated pentaerythritol, preferably of the formula $C(CH_2O(CH_2CH_2O)_nH)_4$,preferably from 900 to 1150 g/cm$^3$, more preferably 950 to 1000 g/cm$^3$ and is most preferred about 1085 g/cm$^3$. It is additionally preferred that the melt viscosity for the ethoxylated pentaerythritol, preferably of the formula $C(CH_2O(CH_2CH_2O)_nH)_4$, measured according to DIN 51562 (70°C) ranges preferably between 3000 to 6000 mm$^2$/s, more preferably 3500 to 5500 mm$^2$/s, most preferred 4000 to 5000 mm$^2$/s.

It is especially preferred that the ethoxylated pentaerythritol is a branched pentaerythritol based ethyleneoxide-copolymer with the formula $C(CH_2O(CH_2CH_2O)_{450}H)_y$ having a molar mass of about 20000 g/mol, melting point (IS03016) of about 60°C, a densitiy at 70°C (DIN 51562) of about 1.085 g/cm$^3$ and a melt viscosity at 70°C (DIN 51562) of 4000-5000 mm$^2$/s (Clariant, polyglycol P10/20000 data sheet issued January 03).

As discussed above, the unsaturated polyolefin having a total amount of carbon-carbon double bonds/1000 C-atoms of more than 0.37 in combination with at least one of the ether and/or ester group containing additives listed above are essential components of the crosslinkable polymer composition of the present invention. In addition to these components, the crosslinkable polymer composition may further comprise optional components which will be discussed below.

In a preferred embodiment, the crosslinkable polymer composition of the present invention further comprises a polar copolymer.

Within the context of the present invention, a polar copolymer is defined to be any copolymer having units derived from a polar comonomer. Further in the context of the present invention, the term 'total amount of carbon-carbon double bonds' for the polar copolymer refers to those double bonds originating from vinyl groups and vinylidene groups. The amount of each type of double bond is measured as indicated in the experimental part.

Preferably, as a polar comonomer, compounds containing hydroxyl groups, alkoxy groups, carbonyl groups, carboxyl groups, and ester groups, are used.

More preferably, compounds containing carboxyl and/or ester groups are used and still more preferably, the compound is selected from the groups of acrylates and acetates.

Still more preferably, the polar comonomer is selected from the group of alkyl acrylates, alkyl methacrylates, and vinyl acetate. Further preferred, the comonomers are selected from $C_1$- to $C_6$-alkyl acrylates, $C_1$- to $C_6$-alkyl methacrylates, and vinyl acetate. Still more preferably, the polar copolymer comprises a copolymer of ethylene with $C_1$- to $C_4$-alkyl, such as methyl, ethyl, propyl or butyl acrylates or vinyl acetate.

For example, polar monomer units may be selected from the group of alkylesters of (meth)acrylic acid such as methyl, ethyl and butyl(meth)acrylate and vinylacetate. The acrylate type of polar comonomer is preferred over acetates due to their better resistance to thermal degradation at high temperatures.

Preferably, the polar copolymer is prepared by copolymerizing an olefin monomer and a polar comonomer.

In a preferred embodiment, the olefin monomer is selected from ethylene or $C_3$ to $C_{20}$ alpha-olefins such as propylene, 1-butene, 4-methyl-1-pentene, 1-hexene, 1-octene or 1-nonene, or mixtures thereof. Even more preferred, the olefin monomer is ethylene.

Preferably, the polar copolymer has an amount of units derived from the polar comonomer of more than 500

micromoles per gram of polar copolymer. In other preferred embodiments, the polar copolymer has an amount of units derived from the polar comonomer of more than 700 micromoles, more than 900 micromoles, or more than 1100 micromoles per gram of polar copolymer.

In a preferred embodiment, the polar copolymer has a total amount of carbon-carbon double bonds (i.e. here the sum of vinyl and vinylidene) of at least 0.15/1000 C-atoms. In other preferred embodiments, the total amount of carbon-carbon double bonds is at least 0.20, at least 0.25, at least 0.30 or at least 0.35/1000 C-atoms.

The total amount of vinyl groups of the polar copolymer is preferably higher than 0.01/1000 carbon atoms. In other preferred embodiments, it is at least 0.05, at least 0.08, at least 0.10, at least 0.12, at least 0.15, at least 0.20, at least 0.25, at least 0.30, at least 0.35, at least 0.40 vinyl groups/1000 carbon atoms. Of course, since a vinyl group is a specific type of carbon-carbon double bond, the total amount of vinyl groups for a given unsaturated polyolefin does not exceed its total amount of double bonds.

Preferably, the amount of vinyl groups originating from the polyunsaturated comonomer is at least 0.03/1000 carbon atoms. In other preferred embodiments, the amount of vinyl groups originating from the polyunsaturated comonomer is at 0.06, at least 0.09, at least 0.12, at least 0.15, at least 0.18, at least 0.21, at least 0.25, at least 0.30, at least 0.35 or at least 0.40/1000 carbon atoms.

Within the context of the present invention, it is also possible to use a polar copolymer having vinylidene groups but substantially no vinyl groups, wherein the amount of carbon-carbon double bonds/1000 C-atoms originating from the vinylidene groups is at least 0.15, 0.20, 0.25, 0.30 or at least 0.35.

Preferably, the polar copolymer comprises units derived from a polyunsaturated comonomer. In a preferred embodiment, the polyunsaturated comonomer consists of a straight carbon chain with at least 8 carbon atoms and at least 4 carbon atoms between the non-conjugated double bonds, of which at least one is terminal.

As preferred polyunsaturated comonomers, the following dienes can be mentioned:

1,7-octadiene, 1,9-decadiene, 1,11-dodecadiene, 1,13-tetradecadiene, or mixtures thereof. Furthermore, dienes like 7-methyl-1,6-octadiene, 9-methyl-1,8-decadiene, or mixtures thereof.

Siloxanes having the following formula:

$$CH_2=CH-[Si(CH_3)_2-O]_n-Si(CH_3)_2-CH=CH_2,$$

wherein n=1 or higher can also be used as a polyunsaturated comonomer. As an example, divinylsiloxane, e.g. $\alpha,\omega$-divinylsiloxane, can be mentioned.

In a preferred embodiment, the polar copolymer comprises units derived from an olefin comonomer. Preferably, the olefin comonomer is selected from ethylene, a $C_3$ to $C_{20}$ alpha-olefin such as propylene, 1-butene, 4-methyl-1-pentene, 1-hexene, 1-octene or 1-nonene, or mixtures thereof.

Preferably, the polar copolymer has a melt flow rate $MFR_{2.16/190°C}$ in the range of 0.5 to 70 g/10 min, more preferably 1-55 g/10 min, even more preferably 1.5-40 g/10 min.

When the polar copolymer is prepared by copolymerizing an olefin such as ethylene with a polar comonomer, optionally in the presence of a polyunsaturated comonomer and/or a $C_3$ to $C_{20}$ alpha-olefin comonomer, this is preferably effected in a high pressure process resulting in low density polyethylene or in a low pressure process in the presence of a catalyst, for example a chromium, Ziegler-Natta or single-site catalyst resulting in either unimodal or multimodal polyethylene.

The multimodal polymer is preferably produced either by mechanical blending of components or in a multi-stage process in a multi-step reaction sequence such as described in WO92/12182.

When preparing the polar ethylene copolymer in a high pressure process, polymerization is generally performed at a pressure of 1200 to 3500 bars and a temperature of 150 to 350°C.

In a preferred embodiment, the crosslinkable polymer composition according to the present invention further comprises a crosslinking agent. In the context of the present invention, a crosslinking agent is defined to be any compound capable to generate radicals which can initiate a crosslinking reaction. Preferably, the crosslinking agent contains at least one -O-O- bond or at least one -N=N- bond. More preferably, the crosslinking agent is a peroxide known in the field.

The crosslinking agent, e.g. a peroxide, is preferably added in an amount of 0.1-3.0 wt.-%, more preferably 0.15-2.6 wt.-%, most preferably 0.2-2.2 wt.-%, based on the weight of the crosslinkable polymer composition.

As peroxides used for crosslinking, the following compounds can be mentioned: di-tert-amylperoxide, 2,5-di (tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, di(tert-butylperoxyisopropyl)benzene, butyl-4,4-bis(tert-butylperoxy)valerate, 1,1-bis (tert-butylperoxy)-3,3,5-trimethylcyclohexane, tert-butylperoxybenzoate, dibenzoylperoxide.

Preferably, the peroxide is selected from 2,5-di(tert-butylperoxy)-2,5-dimethyl-hexane, di(tert-butylperoxy-isopropyl)benzene, dicumylperoxide, tert-butylcumylperoxide, di(tert-butyl)peroxide, or mixtures thereof. Most preferably, the peroxide is dicumylperoxide.

Preferably, the crosslinkable polymer composition further comprises a scorch retarder. In the context of the

present invention, a "scorch retarder" is defined to be a compound that reduces the formation of scorch during extrusion of a polymer composition, at typical extrusion temperatures used, if compared to the same polymer composition extruded without said compound. Besides scorch retarding properties, the scorch retarder may simultaneously result in further effects like boosting, i.e. enhancing crosslinking performance during the crosslinking step.

Preferably, the scorch retarder is selected from 2,4-diphenyl-4-methyl-1-pentene, substituted or unsubstituted diphenylethylene, quinone derivatives, hydroquinone derivatives, monofunctional vinyl containing esters and ethers, or mixtures thereof. More preferably, the scorch retarder is selected from 2,4-diphenyl-4-methyl-1-pentene, substituted or unsubstituted diphenylethylene, or mixtures thereof. Most preferably, the scorch retarder is 2,4-diphenyl-4-methyl-1-pentene.

Preferably, the amount of scorch retarder is within the range of 0.005 to 1.0 wt.-%, more preferably within the range of 0.01 to 0.8 wt.-%, based on the weight of the crosslinkable polyolefin composition. Further preferred ranges are 0.03 to 0.75 wt-%, 0.05 to 0.70 wt-% and 0.07 to 0.50 wt-%, based on the weight of the crosslinkable polyolefin composition.

The polymer composition may contain further additives, such as antioxidants, stabilisers, processing aids, and/or crosslinking boosters. As antioxidant, sterically hindered or semi-hindered phenols, aromatic amines, aliphatic sterically hindered amines, organic phosphates, thio compounds, and mixtures thereof, can be mentioned. Typical crosslinking boosters may include compounds having an allyl group, e.g. triallylcyanurate, triallylisocyanurate, and di-, tri- or tetra-acrylates. As further additives, flame retardant additives, acid scavengers, inorganic fillers and voltage stabilizers can be mentioned.

If an antioxidant, optionally a mixture of two or more antioxidants, is used, the added amount can range from 0.005 to 2.5 wt-%, based on the weight of the crosslinkable polymer composition. If the unsaturated polyolefin is an unsaturated polyethylene, the antioxidant(s) are preferably added in an amount of 0.005 to 0.8 wt-%, more preferably 0.01 to 0.60 wt-%, even more preferably 0.05 to 0.50 wt-%, based on the weight of the crosslinkable polymer composition. If the unsaturated polyolefin is an unsaturated polypropylene, the antioxidant(s) are preferably added in an amount of 0.005 to 2 wt-%, more preferably 0.01 to 1.5 wt-%, even more preferably 0.05 to 1 wt-%, based on the weight of the crosslinkable polymer composition.

Further additives may be present in an amount of 0.005 to 3 wt%, more preferably 0.005 to 2 wt%, based on the weight of the crosslinkable polymer composition. Flame retardant additives and inorganic fillers can be added in higher amounts.

Blend of components (i) and (ii)

The unsaturated polyolefin and the ether and/or ester group containing additive(s), optionally in combination with one or more optional additives discussed above, can be blended by any conventional blending technique to result in the crosslinkable polymer composition.

In a preferred embodiment, the components (i) and (ii) of the crosslinkable polymer composition of the present invention are prepared and/or provided separately and are subsequently blended with each other to result in a blend.

Preferably, the crosslinkable polymer composition has a total amount of carbon-carbon double bonds/1000 carbon atoms of more than 0.30, more preferred more than 0.35, more than 0.40, more than 0.45, more than 0.50, more than 0.55, or more than 0.60 carbon-carbon double bonds /1000 carbon atoms. The total amount of double bonds of the crosslinkable polymer composition is based on vinyl, vinylidene and *trans*-vinylene groups/1000 C-atoms of component (i) and, if present, on vinyl and vinylidene groups/1000 C-atoms of the polar copolymer.

Furthermore, it is preferred that the crosslinkable polymer composition has a total amount of vinyl groups/1000 carbon atoms of more than 0.05. Again, the total amount of vinyl groups includes those of the polar copolymer, if present. In other preferred embodiments, the crosslinkable polymer composition has a total amount of vinyl groups/1000 carbon atoms of at least 0.10, at least 0.15, at least 0.20, at least 0.25, at least 0.30, at least 0.35, at least 0.40,or at least 0.45.

In a preferred embodiment, the crosslinkable polymer composition comprises a total amount of units derived from the polar comonomer of 100 to 800 micromoles, more preferably 150 to 700 micromoles and even more preferably 200 to 600 micromoles per gram of crosslinkable polymer composition. The polar comonomer units can originate from the polar copolymer and/or the unsaturated polyolefin.

From the crosslinkable polymer composition described above, a crosslinked composition can be prepared by blending with a crosslinking agent, followed by treatment under crosslinking conditions, thereby increasing the crosslinking level. Crosslinking can be effected by treatment at increased temperature, e.g. at a temperature of at least 160°C. When peroxides are used, crosslinking is generally initiated by increasing the temperature to the decomposition temperature of the corresponding peroxide. When the peroxide decomposes, radicals are generated from the peroxide. These radicals then intitiate the crosslinking reaction.

Preferably, the crosslinked polymer composition has a hot set elongation value of less than 175 %, more preferably less than 100 %, even more preferably less than 90 %, determined according to IEC 60811-2-1. Hot set

elongation values are related to the degree of crosslinking. The lower the hot set elongation value, the more crosslinked is the material.

As will be demonstrated below in the examples, the crosslinkable polymer composition of the present invention can be crosslinked at higher crosslinking speed and results in a crosslinked polymer composition having an improved electric breakdown strength after wet ageing. The crosslinking speed is an important parameter. If the formulation has an improved crosslinking performance, this can for example be seen in that it takes a shorter time to reach a certain degree of crosslinking. If that is the case, then this could be utilised in different ways: e.g. by running the cable line at an increased line speed or a lower crosslinking temperature profile could be used in the vulcanising tube. One way of evaluating the crosslinking speed is to determine the time needed to reach for example 90% of the final torque value (M90%). The time need is referred to T90%. If the M90% torque value for the reference formulation is determined this value could be compared with the time needed for the inventive formulations to reach that M90% value of the reference material. If a formulation has a shorter T90% value than the used reference, i.e. this formulation reaches the targeted torque value after a shorter time period, demonstrates that this formulation crosslinks faster. In practice this means that this material can be run with an increased line speed on a cable line. Another way of utilising this enhanced crosslinking performance is to reduce the amount of peroxide needed to reach a certain degree of crosslinking.

Increasing the electric field applied to an insulation system, the dielectric material will get an electrical breakdown at a certain value, the so-called breakdown strength. This involves a destructive sudden flow of current leading to a conductive path through the dielectric material, which cannot any longer support an applied voltage.

A dielectric usually is being used at nominal field well below the breakdown strength, but different kind of degradation processes (ageing), for example water treeing, may reduce the breakdown strength over time, possibly to such low levels that the system fails during service.

There are numerous ways to evaluate the resistance of the insualting material to water tree degradation. In the present invention, the method is based on model cables consisting of an inner semiconductive layer, insulation layer and an outer semiconductive layer. The insulation has a thickness of 1.5 mm. The ageing conditions are 9 kV/mm, 50 Hz, 85°C in the water filled conductor area, 70°C in the surrounding water, and an ageing time of 1000 h. The breakdown strength of these model cables is determined before and after ageing. As shown below in the examples, assessment of water tree retarding properties of a polymeric material can be made on the basis of electric breakdown strength measurements after ageing in water. Polymers still having high breakdown strength after ageing in water are considered to have an improved resistance to the formation of water trees.

In a preferred embodiment, the crosslinked polymer composition has an electric breakdown strength of at least 50 kV/mm after 1000 h wet ageing at the ageing conditions described in this section. More preferably, the electric breakdown strength is at least 55, at least 60, or at least 65 kV/mm. The semiconductive material used in the model cable test, both as inner and outer semicon, could be described in the following way: a poly(ethylene-co-butylacrylate) polymer with a butylacrylate content of 1300 micromoles containing 40 wt% of a conductive furnace black. The composition is stabilised with an antioxidant of the polyquinoline type and contains 1 wt% of a peroxide as a crosslinking agent.

From the crosslinkable polymer composition of the present invention, a multilayered article can be prepared wherein at least one layer comprises said polymer composition. When crosslinking is initiated, a crosslinked multilayered article is obtained. Preferably, the multilayered article (either crosslinked or not) is a cable, preferably a power cable.

In the context of the present invention, a power cable is defined to be a cable transferring energy operating at any voltage. The voltage applied to the power cable can be alternating (AC), direct (DC), or transient (impulse). In a preferred embodiment, the multilayered article is a power cable operating at voltages higher than 1 kV. In other preferred embodiments, the power cable prepared according to the present invention is operating at voltages higher than 6 kV, higher than 10 kV or higher than 33 kV.

The multilayered article can be prepared in a process wherein the crosslinkable composition of the present invention, in combination with a crosslinking agent, is applied onto a substrate by extrusion. In such an extrusion process, the sequence of mixing the components of the crosslinkable composition can be varied, as explained below. In the following examples about the blending sequence, reference is made to the ether and/or ester group containing additive in general. In a preferred embodiment, the ether and/or ester group containing additive mentioned below is a glycerol ester compound, polyethylene glycol or a mixture of both. However, the following statements about the mixing sequence are also applicable the other ether and/or ester group containing additives.

According to a preferred embodiment, the unsaturated polyolefin and at least one ether and/or ester group containing additive are mixed with each other and with one or more antioxidant(s), possibly in combination with further additives, either on solid pellets or powder of the different polymer components or by melt mixing, followed by forming pellets from the melt. Subsequently, the crosslinking agent, preferably a peroxide, and optionally a scorch retarder and/or a crosslinking booster are added to the pellets or powder in a second step. Alternatively, the scorch retarder and/or crosslinking booster could already be added in the first step, together with the antioxidant(s). The final pellets are fed to the extruder, e.g. a cable extruder.

According to another preferred embodiment, instead of a two-step process, the unsaturated polyolefin and at

least one ether and/or ester group containing additive, preferably in the form of pellets or powder, the antioxidant (s) and crosslinking agent, and optionally a scorch retarder and/or further additives such as a crosslinking booster, are added to a compounding extruder, single or twin screw. Preferably, the compounding extruder is operated under careful temperature control.

According to another preferred embodiment, a mix of all components, i.e. including antioxidant (s) and crosslinking agent and optionally a scorch retarder and/or further additives such as a crosslinking booster, are added onto the pellets or powder made of the unsaturated polyolefin and at least one ether and/or ester group containing additive.

According to another preferred embodiment, pellets made of the unsaturated polyolefin and at least one ether and/or ester group containing additive, optionally further containing antioxidant(s) and additional additives, are prepared in a first step, e.g. by melt mixing. These pellets, obtained from the melt mixing, are then fed into the cable extruder. Subsequently, crosslinking agent and optionally a scorch retarder and/or a crosslinking booster are either fed in the hopper or directly into the cable extruder. Alternatively, crosslinking agent and/or scorch retarder and/or crosslinking booster are already added to the pellets before feeding these pellets into the cable extruder.

According to another preferred embodiment, pellets made of the unsaturated polyolefin and at least one ether and/or ester group containing additive without any additional components are fed to the extruder.

Subsequently, antioxidant(s), crosslinking agent and optionally a scorch retarder, optionally in combination further additives such as a crosslinking booster, are either fed in the hopper or directly fed into the polymeric melt within the cable extruder. The ether and/or ester group containing additive could be added in this step instead, together with the antioxidant(s), crosslinking agent, scorch retarder and the other optional additives used. Alternatively, at least one of these components, i.e. crosslinking agent, scorch retarder, crosslinking booster, antioxidant(s), or a mixture of these components is already added to the pellets before feeding these pellets into the cable extruder.

According to another preferred embodiment, a highly concentrated master batch is prepared. The master batch may comprise one or more of the following components: antioxidant(s), scorch retarder and/or crosslinking booster and crosslinking agent. The ether and/or ester group containing additive(s) can also be provided in a master batch. Furthermore, it is possible to provide each of the additives mentioned above in a separate master batch. The one or more master batches are then added to or mixed with the unsaturated polyolefin and the ether and/or ester group containing additive(s), if not already provided in a master batch. If there is any component not added through the masterbatch, that component either has to be present in the pellets or powder used from the start or it has to be added separately prior to or during the extrusion process.

When producing a power cable by extrusion, the polymer composition can be applied onto the metallic conductor and/or at least one coating layer thereof, e.g. a semiconductive layer or insulating layer. Typical extrusion conditions are mentioned in WO 93/08222.

The present invention is now described in further detail by the following examples.

## Examples

Testing methods/measuring methods

(a) Determination of the amount of double bonds

The procedure for the determination of the amount of double bonds/1000 C-atoms is based upon the ASTM D3124-72 method. In that method, a detailed description for the determination of vinylidene groups/1000 C-atoms is given based on 2,3-dimethyl-1,3-butadiene. The described sample preparation procedure has also been applied for the determination of vinyl groups/1000 C-atoms, vinylidene groups/1000 C-atoms and *trans*-vinylene groups/1000 C-atoms in the present invention. However, for the determination of the extinction coefficient for these three types of double bonds, the following three compounds have been used: 1-decene for vinyl, 2-methyl-1-heptene for vinylidene and trans-4-decene for *trans*-vinylene, and the procedure as described in ASTM-D3124 section 9 was followed.

The total amount of double bonds was analysed by means of IR spectrometry and given as the amount of vinyl bonds, vinylidene bonds and *trans*-vinylene bonds, respectively.

Thin films were pressed with a thickness of 0.5-1.0 mm. The actual thickness was measured. FT-IR analysis was performed on a Perkin Elmer 2000. Four scans were recorded with a resolution of 4 $cm^{-1}$.

A base line was drawn from 980 $cm^{-1}$ to around 840 $cm^{-1}$. The peak heights were determined at around 888 $cm^{-1}$ for vinylidene, around 910 $cm^{-1}$ for vinyl and around 965 $cm^{-1}$ for *trans*-vinylene. The amount of double bonds/1000 carbon atoms was calculated using the following formulas :

$$\text{vinylidene/1000 C-atoms} = (14 \times A)/(18.24 \times L \times D)$$

$$\text{vinyl/1000 C-atoms} = (14 \times A)/(13.13 \times L \times D)$$

$$\textit{trans}\text{-vinylene/1000 C-atoms} = (14 \times A)/(15.14 \times L \times D)$$

wherein
A: absorbance (peak height)
L: film thickness in mm
D: density of the material (g/cm$^3$)

(b) Determination of the vinyl content originating from the polyunsaturated compound

The number of vinyl groups originating from the polyunsaturated comonomer (i.e. in this example 1,7-octadiene) per 1000 carbon atoms was determined as follows:

Polymers 1-4 have been produced on the same reactor, basically using the same conditions, i.e. similar temperature and pressure. Then, it is assumed that the base level of vinyl groups, i.e. the ones formed by the process without the addition of chain transfer agent resulting in vinyl groups, is the same for polymers 1-4. This base level is then subtracted from the measured numbers of vinyl groups in polymers 1-3, thereby resulting in the number of vinyl groups/1000 C-atoms, which result from the polyunsaturated comonomer.

All polymers were polymerised in a high pressure tubular reactor at a pressure of 1000 to 3000 bar and a temperature of 100 to 300°C. All polymers have a density within the range of 0.920-0.925 g/cm$^3$.

(c) Density measurements

The density was determined on a pressed plaque or from a string from the MFR equipment. In case of a plaque, this was pressed at 175 °C and the cooling rate used 15 °C/min. A piece was cut out from the string or from the plaque and this piece was then conditioned in boiling water for 30 minutes followed by cooling for 1 h (material still kept in the water). Then the density measurement was done in a density column. Parts of this procedure follow the ASTM D2839.

(d) Elastograph measurements of the degree of crosslinking

The degree of crosslinking was determined on a Göttfert Elastograph™. The measurements were carried out using press-moulded circular plaques. First, a circular plaque was pressed at 120°C, 2 min. without pressure, followed by 2 min. at 5 tons. Then, the circular plaque was cooled to room temperature. In the Elastograph, the evolution of the torque is measured as a function of crosslinking time at 180°C. The reported torque values are those reached after 10 minutes of crosslinking at 180°C.

In the torque measurements which are carried out as explained above, the evolution of the torque as a function of time is monitored. In addition thereto, the time to reach a certain degree of cure was recorded as a way to assess the crosslinking speed properties. Here the degree of cure was chosen to be 90% of the final torque value in a reference material (here Comparative Example 1 and Comparative Example 2 respectively). This torque value is then referred to as the M90% value and the time needed to reach the respective M90% value is the so-called T90% value. The M90%cure value is determined according to the equation given below where the $M_{max}$ value is the maximum torque value reached and the $M_{min}$ is the minimum torque value in the curve. The calculation is done according to the following equation:

$$M90\%cure = M_{min} + 0.90(M_{max} - M_{min})$$

This M90%cure value was calculated for Comparative formulation 1 and Comparative formulation 2, see the Examples part. From this M90% cure value the T90% is calculated. The shorter the time needed to reach the M90% for the respective Comparative formulation the higher the crosslinking speed. The time reported is the time it takes from the start of the test until the M90% torque value of the reference has been reached.

(e) Measurement of hot set and permanent deformation

Hot set elongation and permanent deformation are determined on crosslinked plaques. These plaques are prepared as follows: First, the pellets were melted at 115°C at around 10 bar for 2 minutes. Then the pressure was increased to 200 bar, followed by ramping the temperature up to 165°C. The material was kept at 165°C for 25 minutes and after that it was cooled down to room temperature at a cooling rate of 15°C/min. The thickness of the plaque was around 1.8 mm.

The hot set elongation as well as the permanent deformation were determined on samples taken from the crosslinked plaques. These properties were determined according to IEC 60811-2-1. In the hot set test, a dumbbell of the tested material is equipped with a weight corresponding to 20 N/cm$^2$. This specimen is put into an oven at 200°C and after 15 minutes, the elongation is measured. Subsequently, the weight is removed and the sample is allowed to relax for 5 minutes. Then, the sample is taken out from the oven and is cooled down to room temperature. The permanent deformation is determined.

(f) Melt flow rate

The melt flow rate is equivalent to the term "melt index" and is determined according to ISO 1133 and is indicated in g/10 min. Melt flow rate is determined at different loadings, such as 2.16 kg ($MFR_2$). Melt flow rate is determined at a temperature of 190°C.

(g) Wet ageing test

The wet ageing test is based on a procedure described in an article by Land H.G. and Schädlich H., "Model Cable Test for Evaluating the Ageing Behaviour under Water Influence of Compounds for Medium Voltage Cables", Conference Proceedings of Jicable 91, June 24 to 28, 1991, Versaille, France.

The wet ageing properties were evaluated on (model cables) minicables. These cables consist of a Cu wire onto which an inner semiconductive layer, an insulation layer and an outer semiconductive layer are applied. The modelcable has the following construction: inner semiconductive layer of 0.7 mm, insulation layer of 1.5 mm and outer semiconductive layer of 0.15 mm. The cables are extruded and vulcanised, i.e. the material is crosslinked. After this the model cables are preconditioned at 80°C for 72h.

The Cu wire is removed and then replaced by a thinner Cu wire. The cables are put into water bath to be aged for 1000 h under electric stress and at a temperature of 70°C of the surrounding water and at a temperature of the water in the conductor area of 85 °C. The initial breakdown strength as well as the breakdown strength after 1000 h wet ageing are determined.

The cables are prepared and aged as described below.

| | |
|---|---|
| Preconditioning: | 80°C, 72 h |
| Applied voltage: | 9 kV/50 Hz |
| Electric stress (max.): | 9 kV/mm |
| Electric stress (mean): | 6 kV/mm |
| Conductor temperature: | 85°C |
| Water bath temperature: | 70°C |
| Ageing time: | 1000 h |
| Deionized water in conductor and outside: if not otherwise stated | |

Five specimens with 0.50 m active length from each cable were aged.

The specimens were subjected to ac breakdown tests (voltage ramp: 100 kV/min.) and the Weibull 63.2 % values of the breakdown strength (field stress at the inner semiconductive layer) are determined before and after ageing.

(h) Amount of polar comonomer units within the polymer composition (either crosslinkable or crosslinked)

The calculation of the amount of polar comonomer units within the polymer composition (either crosslinkable or crosslinked) is explained by making reference to the following example:

1 g formulation contains 23 wt-% of the polar ethylene copolymer. The polar ethylene copolymer contains 17 wt-% polar comonomer units. The molecular weight of the polar comonomer unit used ($M_{polar\ comonomer\ unit}$) has to be

introduced, for example 86 g/mole for methylacrylate, and 128 g/mole for butylacrylate.

$$\frac{(1x0.23x0.17)}{128} = 305\ x10^{-6}\ moles(or\ 305\ micromoles)$$

Polymers

Polymer 1 to Polymer 3 are poly(ethylene-co-1,7-octadiene) polymers according to the present invention containing different levels of 1,7-octadiene.

Polymer 4 is a homopolymer that is used as the reference material.

Further information about these polymers is provided in Table 1.

Table 1. Amount and type of double bonds in Polymers 1-4.

| Sample | $MFR_{2.16}$, 190°C (g/10min) | Total amount of carbon-carbon double bonds/1000 C | Total amount vinyl/1000 C | Vinyl from diene/1000 C | Vinylidene/1000 C | *Trans*-vinylene/1000 C |
|---|---|---|---|---|---|---|
| Polymer 1 | 2.7 | 1.17 | 0.82 | 0.71 | 0.24 | 0.11 |
| Polymer 2 | 2.0 | 0.53 | 0.26 | 0.15 | 0.21 | 0.06 |
| Polymer 3 | 2.0 | 0.60 | 0.28 | 0.17 | 0.26 | 0.06 |
| Polymer 4 | 2.0 | 0.37 | 0.11 | - | 0.22 | 0.04 |

The unsaturated polymers 1-2 were blended with either polyethylene glycol or polyethylene glycol in combination with the glycerol ester compound to result in inventive formulations 1-4. From reference polymer 4 comparative formulations 1-2 were prepared. Further information is provided in Table 2.

Table 2. Formulations for crosslinking experiments and crosslinking data

| Sample | Polymer | AO content (wt%) | Additive 1 content (wt%) | Additive 2 content (wt%) | Cross-linking agent (wt%) |
|---|---|---|---|---|---|
| Inventive formulation 1 | Polymer 1 | 0.2 | 0.5 | - | 1.9 |
| Inventive formulation 2 | Polymer 1 | 0.2 | 0.25 | 0.35 | 1.9 |
| Inventive formulation 3 | Polymer 2 | 0.2 | 0.5 | - | 1.9 |
| Inventive formulation 4 | Polymer 2 | 0.2 | 0.25 | 0.35 | 1.9 |
| Comparative example 1 | Polymer 4 | 0.2 | 0.5 | - | 1.9 |
| Comparative example 2 | Polymer 4 | 0.2 | 0.25 | 0.35 | 1.9 |
| Additive 1 is polyethylene glycol PEG20000 (CAS number 25322-68-3)<br>Additive 2 is the glycerolester compound (CAS number 68953-55-9)<br>Antioxidant AO is 4,4'-thiobis (2-tertbutyl-5-methylphenol) (CAS number 96-69-5)<br>Crosslinking agent is dicumylperoxide (CAS number 80-43-3) | | | | | |

Table 3: Crosslinking data and cure speed data

| Sample | Elastograph value (Nm) | Time to reach torque corresponding to T90% in reference (s) | Hot set elongation (%) | Permanent deformation (%) |
|---|---|---|---|---|
| Inventive formulation 1 | 0.98 | 84* | 21 | -1.5 |
| Inventive formulation 2 | 0.85 | 84** | 23.1 | 0.6 |
| Inventive formulation 3 | 0.61 | 180* | 66.8 | 2.6 |
| Inventive formulation 4 | 0.58 | 162** | 66.2 | 2.9 |
| Comparative formulation 1 | 0.58 | 227* | 107.4 | 4 |
| Comparative formulation 2 | 0.52 | 233** | 121.2 | 7.4 |
| * Time to reach 0.52 Nm which is the M90% value in comparative formulation 1. Inventive formulations 1 and 3 are compared with comparative formulation 1.<br>** Time to reach 0.47 Nm which is the M90% value in comparative formulation 2. Inventive formulations 2 and 4 are compared with comparative formulation 2. | | | | |

The results of Table 3 demonstrate that the inventive formulations reached lower values of hot set elongation and permanent deformation and higher torque values compared to the respective comparative example. Furthermore, the inventive formulations can be crosslinked with a significantly higher crosslinking speed.

Formulations used for assessment of water tree retarding properties are summarized in Table 4.

Table 4: Formulations for water tree retarding properties

| Sample | Polymer | AO content (wt%) | Additive 1 content (wt%) | Additive 2 content (wt%) | Crosslin-king agent (wt%) | Scorch retardant (wt%) | Hot set elong. (wt%) | Permanent deformation (wt%) |
|---|---|---|---|---|---|---|---|---|
| Inventive formulation 5 | Polymer 3 | 0.2% AO-2/0.4% AO-3 | 0.25 | 0.35 | 1.5 | 0.35 | 62.8 | 1.4 |
| Comp. formulation 3 | Polymer 2 | 0.2% AO-1 | - | - | 2.1 | 0.4 | 29.0 | 0 |
| Antioxidant AO-1 is 4,4'-thiobis (2-tertbutyl-5-methylphenol) (CAS number 96-69-5)<br>Antioxidant, AO-2 is 2,2'-thio-diethyl-bis(3-(3,5-di-tertbutyl-4-hydroxyphenyl)propionate) (CAS number 41484-35-9)<br>Antioxidant, AO-3 is di-stearyl-thio-dipropionate (CAS number 693-36-7) | | | | | | | | |

The initial values for electric breakdown strength as well as the values obtained after wet ageing are summarized in Table 5.

Table 5: Summary of the wet ageing results.

| Sample | $Eb_{63\%}$ (0 h) (kV/mm) | $Eb_{63\%}$ (1000 h) (kV/mm) |
|---|---|---|
| Inventive formulation 5 | >89.4 | 71.2 |
| Comp. formulation 3 | >86.8 | 40.8 |

The results of Table 5 clearly indicate that the inventive formulation has significantly improved water tree retarding properties.

Further examples about wet ageing properties are summarized in Table 6. For inventive formulations 6 to 14, the additives listed below have been blended with polymer 2. Type and amount of antioxidant and crosslinking agent correspond to those of inventive formulation 5, with the exception of inventive formulation 11 where 2,2'-thio-diethyl-bis (3-(3,5-di-tertbutyl-4-hydroxyphenyl)propionate) has been used as the antioxidant. Comparative example 3 is also based on polymer 2 but does not include any of the ether and/or ester group containing additives.

**Table 6: Further data about wet ageing properties**

| **Example** | **Add. 1** [wt.%] | **Add. 2** [wt.%] | **Add. 3** [wt.%] | **Add. 4** [wt.%] | **Add. 5** [wt.%] | **Add. 6** [wt.%] | **Add. 7** [wt.%] | **Eb after 1000h kv/mm** |
|---|---|---|---|---|---|---|---|---|
| Invent. form 6 | 0,25 | | | 0,5 | | | | 78,7 |
| Invent. form 7 | 0,25 | | | | 0,3 | | | 76,6 |
| Invent. form 8 | 0,25 | | | | | 0,25 | | 73,7 |
| Invent. form 9 | 0,25 | | | | | 0,15 | | 69 |
| Invent. form 10 | | | | | 0,5 | | | 78,9 |
| Invent. form 11 | | 0,35 | 0,25 | | | | 0,25 | 82,8 |
| Invent. form 12 | | 0,35 | | | 0,25 | | | 62,6 |
| Invent. form 13 | 0,25 | | | | | | | 55,4 |
| Invent. form. 14 | | 0,6 | | | | | | 52,5 |
| Comp Ex 3 | | | | | | | | 40.8 |

1 Polyethyleneglycol PEG20000 (CAS number 25322-68-3)
2 Glycerolester compound (CAS number 68953-55-9)
3 Ethoxylated pentaerythritol (of the formula $C(CH_2(CH_2CH_2O)_{450}H)_{14}$ with a MW=20000 g/mol (CAS-Nr.: 58205-99-5, P 20000)
4 Polyoxyethylene mono ethanolamide of alkyl fatty acid (CAS-NR 68425-44-5)
5 Propylene glycol block copolymer consisting of polypropylene glycol and polyethylene glycol of the formula $HO(CH_2CH_2O)_x(CH(CH_3)CH_2)_y(CH_2H_2O)_ZH$ whereby the molecular weight of the polypropylene glycol block is 3250 g/mol and the polyethylene glycol amount in the total polymer is 50%. The density (60°C) is 1.03 m Pa s, the surface tension according to DIN 5390, (23°C, 2g soda/l dest water, lg/l) is ca. 300 s, the surface tension according to DIN 53914 (23°C, lg/l dest water) is ca 39 mN/m and the melting point is ca. 44°C. Purchased by BASF (PE 10500).
6 Is an ethylene oxide condensation product of saturated fatty acids (ethoxylated fatty acids) with a density (50°C) of 1000 kg/$m^3$, a melting range of 34-42°C and a viscosity (50°C) of 50 m Pa s purchased by Akzo Nobel (Fintex 10)
7 α-Tocopheroleacetate (CAS-Nr.: 58-95-7)

The results clearly demonstrate that wet ageing properties are significantly improved when adding an ether and/or ester group containing additive to the unsaturated polyolefin. The effect is even more pronounced when adding combinations of ether and/or ester group containing additives although the total amount of additives has not been increased compared to a formulation comprising only a single additive.

## Claims

**1.** A crosslinkable polymer composition, comprising

(i) an unsaturated polyolefin having a total amount of carbon-carbon double bonds/1000 carbon atoms of more than 0.37 based upon ASTMD 3124-72, wherein the base line is drawn from 980 $cm^{-1}$ to around 840$cm^{-1}$ and the peak heights are determined at around 888 $cm^{-1}$ for vinylidene, around 910 $cm^{-1}$ for vinyl and around 965 $cm^{-1}$ for trans-vinylene and

(ii) at least one ether and/or ester group containing additive selected from the group consisting of polyethylene glycol, a glycerol ester compound, polypropylene glycol, an amido group containing fatty acid ester, ethoxylated and/or propoxylated pentaerythritol, an alpha-tocopherol ester, an ethoxylated and/or propoxylated fatty acid, and derivatives thereof.

2. The polymer composition according to claim 1, wherein the unsaturated polyolefin has a total amount of carbon-carbon double bonds/1000 carbon atoms of at least 0.45 based upon ASTMD 3 124-72, wherein the base line is drawn from 980 $cm^{-1}$ to around 840$cm^{-1}$ and the peak heights are determined at around 888 $cm^{-1}$ for vinylidene, around 910 $cm^{-1}$ for 1 vinyl and around 965 $cm^{-1}$ for trans-vinylene.

3. The polymer composition according to claim 1 or claim 2, wherein at least some of the carbon-carbon double bonds are vinyl groups.

4. The polymer composition according to claim 3, wherein the unsaturated polyolefin has a total amount of vinyl groups/ 1000 carbon atoms of more than 0.11 based upon ASTMD 3124-72 wherein the base is drawn from 980 $cm^{-1}$ to around 840$cm^{-1}$ and the peak height are determined at around 910 $cm^{-1}$ for vinyl.

5. The polymer composition according to one of the preceding claims,
wherein the unsaturated polyolefin is prepared by copolymerizing an olefin monomer and at least one polyunsaturated comonomer.

6. The polymer composition according to claim 5, wherein the unsaturated polyolefin has an amount of vinyl groups/ 1000 carbon atoms which originate form the polyunsaturated comonomer, of at least 0.03.

7. The polymer composition according to claim 5 or claim 6, wherein at least one polyunsaturated comonomer is a diene.

8. The polymer composition according to claim 7, wherein the diene is selected from 1,7-octadiene, 1,9-decadiene, 1,11-dodecadiene, 1,13-tetradecadiene, 7-methyl-1,6-octadiene, 9-methyl-1,8-decadiene, or mixtures thereof.

9. The polymer composition according to claim 7, wherein the diene is selected from siloxanes having the following formula:

$$CH_2=CH-[Si(CH_3)_2-O]_n-Si(CH_3)_2-CH=CH_2,$$

wherein n=1 or higher.

10. The polymer composition according to one of the claims 5-9, wherein the olefin monomer is ethylene.

11. The polymer composition according to claim 10, wherein the unsaturated polyethylene is produced by high pressure radical polymerization.

12. The polymer composition according to claim 10 or 11, the unsaturated polyethylene further comprising units derived from $C_3$-$C_{20}$ alpha-olefin comonomers.

13. The polymer composition according to one of the preceding claims, wherein the unsaturated polyolefin comprises polar units derived from acrylate, methacrylate or vinyl acetate comonomers, or mixtures therefrom.

14. The polymer composition according to one of the preceding claims, wherein the acrylate comonomers are selected from methylacrylate, ethylacrylate, propylacrylate, butylacrylate, or mixtures therefrom.

15. The polymer composition according to claim 13 or claim 14, wherein the amount of units derived from the polar comonomer is less than 150 micromoles per gram of unsaturated polyolefin.

16. The polymer composition according to one of the preceding claims, wherein the ether and/or ester group containing

additive is polyethylene glycol and/or the glycerol ester compound.

**17.** The polymer composition according to one of the preceding claims, the glycerol ester compound having the following formula:

$$R^1O[C_3H_5(OR^2)O]_nR^3$$

wherein n≥1,
$R^1$, $R^2$ and $R^3$, which can be the same or different, are hydrogen or the residue of a carboxylic acid, with the proviso that there are at least two free OH groups and at least one residue of a carboxylic acid in the glycerol ester compound.

**18.** The polymer composition according to claim 17, wherein the carboxylic acid residue has from 8 to 24 carbon atoms.

**19.** The polymer composition according to claim 17 or 18, wherein the glycerol ester compound is present in an amount of 0.05-2wt%, based on the weight of the crosslinkable polymer composition.

**20.** The polymer composition according to one of the preceding claims, wherein the polyethylene glycol has a number average molecular weight of 1000 to 50000.

**21.** The polymer composition according to claim 20, wherein the polyethylene glycol is present in an amount of 0.05-5wt%, based on the weight of the crosslinkable polymer composition.

**22.** The polymer composition according to one of the preceding claims, further comprising a polar copolymer prepared by copolymerizing an olefin monomer and a polar comonomer.

**23.** A crosslinked polymer composition, obtained by treatment of the crosslinkable polymer composition according to one of the claims 1-22 under crosslinking conditions.

**24.** The crosslinked polymer composition according to claim 23, having a hot set elongation value of less than 175 %, determined according to IEC 60811-2-1.

**25.** The crosslinked polymer composition according to claim 23 or 24, having an electric breakdown strength of at least 50 kV/mm after 1000 h wet ageing at a water bath temperature of 70°C and a conductor temperature of 85°C and an electric stress of 9 kV/mm.

**26.** A process for preparing a crosslinked polymer composition, wherein the crosslinkable polymer composition according to one of the claims 1-22 is blended with a crosslinking agent, and the blend is treated under crosslinking conditions.

**27.** A crosslinkable multilayered article, wherein at least one layer comprises the crosslinkable polymer composition according to one of the claims 1-22.

**28.** A crosslinked multilayered article, wherein at least one layer comprises the crosslinked polymer composition according to one of the claims 23-25.

**29.** The crosslinked multilayered article according to claim 28, which is a power cable.

**30.** A process for preparing a crosslinked multilayered device, wherein the crosslinkable polymer composition according to one of the claims 1-22 and a crosslinking agent are applied onto a substrate by extrusion, followed by treatment under crosslinking conditions.

**31.** The process according to claim 30, wherein the unsaturated polyolefin, at least one of the ether and/or ester group containing additives, and one or more antioxidants and a crosslinking agent, optionally in combination with a scorch retarder and/or a crosslinking booster, are blended in a single step, followed by feeding the obtained mixture into the extruder.

**32.** The process according to claim 30, wherein the crosslinkable polymer composition is blended with a scorch retarder and/or antioxidant(s) first, followed by blending the obtained mixture with the crosslinking agent, and feeding the final mixture into the extruder.

**33.** The process according to claim 30, wherein the unsaturated polyolefin and at least one of the ether and/or ester group containing additives together with antioxidant(s) are melt mixed, optionally in combination with a scorch retarder and/or a crosslinking booster; the blend is formed to pellets; and a crosslinking agent and optionally a scorch retarder and/or a crosslinking booster are added to the pellets prior to or during extrusion.

**34.** The process according to claim 30, wherein a melt of the unsaturated polyolefin is provided in the extruder, followed by adding at least one of the ether and/or ester group containing additives, antioxidant(s), the crosslinking agent and optionally a scorch retarder and/or a crosslinking booster in the hopper or to the melt, either simultaneously or in subsequent steps.

**Patentansprüche**

**1.** Vernetzbare Polymerzusammensetzung, umfassend:

(i) ein ungesättigtes Polyolefin mit einer Gesamtmenge an Kohlenstoff-Kohlenstoff-Doppelbindungen/1000 Kohlenstoffatome von mehr 0,37, und zwar auf ASTM D 3124-72 basierend, wobei die Grundlinie von 980 $cm^{-1}$ bis etwa 840 $cm^{-1}$ gezogen wird und die Peakhöhen für Vinyliden bei etwa 888 $cm^{-1}$, für Vinyl bei etwa 910 $cm^{-1}$ und für trans-Vinylen bei etwa 965 $cm^{-1}$ bestimmt werden, und
(ii) zumindest einen Ether- und/oder Estergruppen enthaltenden Zusatz, der aus der Gruppe ausgewählt ist, bestehend aus Polyethylenglycol, einer Glycerolesterverbindung, Polypropylenglycol, einem Amidogruppen enthaltenden Fettsäureester, ethoxyliertem und/oder propoxyliertem Pentaerythritol, einem $\alpha$-Tocopherolester, einer ethoxylierten und/oder propoxylierten Fettsäure und Derivaten davon.

**2.** Polymerzusammensetzung nach Anspruch 1, wobei das ungesättigte Polyolefin eine Gesamtmenge an Kohlenstoff-KohlenstoffDoppelbindungen/1000 Kohlenstoffatome von mindestens 0,45 aufweist, und zwar auf ASTM D 3124-72 basierend, wobei die Grundlinie von 980 $cm^{-1}$ bis etwa 840 $cm^{-1}$ gezogen wird und die Peakhöhen für Vinyliden bei etwa 888 $cm^{-1}$, für Vinyl bei etwa 910 $cm^{-1}$ und für trans-Vinylen bei etwa 965 $cm^{-1}$ bestimmt werden.

**3.** Polymerzusammensetzung nach Anspruch 1 oder Anspruch 2, wobei zumindest einige der Kohlenstoff-Kohlenstoff-Doppelbindungen Vinylgruppen sind.

**4.** Polymerzusammensetzung nach Anspruch 3, wobei das ungesättigte Polyolefin eine Gesamtmenge an Vinylgruppen/1000 Kohlenstoffatome von mehr als 0,11 aufweist, und zwar auf ASTM D 3124-72 basierend, wobei die Basis von 980 $cm^{-1}$ bis etwa 840 $cm^{-1}$ gezogen wird und die Peakhöhe für Vinyl bei etwa 910 $cm^{-1}$ bestimmt wird.

**5.** Polymerzusammensetzung nach einem der vorstehenden Ansprüche, wobei das ungesättigte Polyolefin durch Copolymerisieren von einem Olefinmonomer und zumindest einem mehrfach ungesättigten Comonomer erzeugt wird.

**6.** Polymerzusammensetzung nach Anspruch 5, wobei das ungesättigte Polyolefin eine Menge an Vinylgruppen/1000 Kohlenstoffatome, die vom mehrfach ungesättigten Comonomer stammen, von mindestens 0,03 aufweist.

**7.** Polymerzusammensetzung nach Anspruch 5 oder Anspruch 6, wobei zumindest ein mehrfach ungesättigtes Comonomer ein Dien ist.

**8.** Polymerzusammensetzung nach Anspruch 7, wobei das Dien ausgewählt ist aus 1,7-Octadien, 1,9-Decadien, 1,11-Dodecadien, 1,13-Tetradecadien, 7-Methyl-1,6-octadien, 9-Methyl-1,8-decadien oder Gemischen davon.

**9.** Polymerzusammensetzung nach Anspruch 7, wobei das Dien aus Siloxanen mit der folgenden Formel ausgewählt ist:

$$CH_2=CH-[Si(CH_3)_2-O]_n-Si(CH_3)_2-CH=CH_2$$

worin n = 1 oder mehr ist.

**10.** Polymerzusammensetzung nach einem der Ansprüche 5 bis 9, wobei das Olefinmonomer Ethylen ist.

**11.** Polymerzusammensetzung nach Anspruch 10, wobei das ungesättigte Polyethylen durch Hochdruck-Radikalpolymerisation erzeugt wird.

**12.** Polymerzusammensetzung nach Anspruch 10 oder 11, wobei das ungesättigte Polyethylen ferner Einheiten umfaßt, die von Comonomeren in Form von $C_3$-$C_{20}$-$\alpha$-Olefinen stammen.

**13.** Polymerzusammensetzung nach einem der vorstehenden Ansprüche, wobei das ungesättigte Polyolefin polare Einheiten umfaßt, die von Acrylat-, Methacrylat- oder Vinylacetat-Comonomeren oder Gemischen davon stammen.

**14.** Polymerzusammensetzung nach einem der vorstehenden Ansprüche, wobei die Arcylatcomonomere aus Methacrylat, Ethylacrylat, Propylacrylat, Butylacrylat oder Gemischen davon ausgewählt sind.

**15.** Polymerzusammensetzung nach Anspruch 13 oder Anspruch 14, wobei die Menge der vom polaren Comonomer stammenden Einheiten weniger als 150 Mikromol pro Gramm ungesättigtem Polyolefin beträgt.

**16.** Polymerzusammensetzung nach einem der vorstehenden Ansprüche, wobei der Ether- und/oder Estergruppen enthaltende Zusatz Polyethylenglycol und/oder die Glycerolesterverbindung ist.

**17.** Polymerzusammensetzung nach einem der vorstehenden Ansprüche, wobei die Glycerolesterverbindung die folgende Formel hat:

$$R^1O[C_3H_5(OR^2)O]_nR^3$$

worin $n \geq 1$ ist,
$R^1$, $R^2$ und $R^3$, die gleich oder verschieden sein können, Wasserstoff oder ein Carbonsäurerest sind, mit der Maßgabe, daß es in der Glycerolesterverbindung mindestens zwei ungebundene OH-Gruppen und zumindest einen Carbonsäurerest gibt.

**18.** Polymerzusammensetzung nach Anspruch 17, wobei der Carbonsäurerest 8 bis 24 Kohlenstoffatome aufweist.

**19.** Polymerzusammensetzung nach Anspruch 17 oder 18, wobei die Glycerolesterverbindung in einer Menge von 0,05 bis 2 Gew.-% vorliegt, und zwar auf das Gewicht der vernetzbaren Polymerzusammensetzung bezogen.

**20.** Polymerzusammensetzung nach einem der vorstehenden Ansprüche, wobei das Polyethylenglycol ein Zahlenmittel des Molekulargewichts von 1000 bis 50000 aufweist.

**21.** Polymerzusammensetzung nach Anspruch 20, wobei das Polyethylenglycol in einer Menge von 0,05 bis 5 Gew.-% vorliegt, und zwar auf das Gewicht der vernetzbaren Polymerzusammensetzung bezogen.

**22.** Polymerzusammensetzung nach einem der vorstehenden Ansprüche, die ferner ein polares Copolymer umfaßt, das durch Copolymerisieren von einem Olefinmonomer und einem polaren Comonomer erzeugt wurde.

**23.** Vernetzte Polymerzusammensetzung, die durch Behandeln der vernetzbaren Polymerzusammensetzung nach einem der Ansprüche 1 bis 22 unter Vernetzungsbedingungen erhalten wurde.

**24.** Vernetzte Polymerzusammensetzung nach Anspruch 23, die einen Dehnungswert im warmgehärteten Zustand von weniger als 175 % aufweist, und zwar gemäß IEC 60811-2-1 bestimmt.

**25.** Vernetzte Polymerzusammensetzung nach Anspruch 23 oder 24, die eine Beständigkeit gegenüber einem elektrischen Durchschlag von mindestens 50 kV/mm aufweist, nach einem 1000stündigen Altern im feuchten Zustand bei einer Wasserbadtemperatur von 70°C und einer Leitertemperatur von 85°C und einer Strombelastung von 9 kV/mm.

**26.** Verfahren zum Herstellen einer vernetzten Polymerzusammensetzung, wobei die vernetzbare Polymerzusammensetzung nach einem der Ansprüche 1 bis 22 mit einem Vernetzungsmittel gemischt wird und das Gemisch unter Vernetzungsbedingungen behandelt wird.

**27.** Vernetzbarer mehrschichtiger Gegenstand, wobei zumindest eine Schicht die vernetzbare Polymerzusammensetzung nach einem der Ansprüche 1 bis 22 umfaßt.

**28.** Vernetzter mehrschichtiger Gegenstand, wobei zumindest eine Schicht die vernetze Polymerzusammensetzung nach einem der Ansprüche 23 bis 25 umfaßt.

**29.** Vernetzter mehrschichtiger Gegenstand nach Anspruch 28, der ein Stromkabel ist.

**30.** Verfahren zum Herstellen einer vernetzten mehrschichtigen Vorrichtung, wobei die vernetzbare Polymerzusammensetzung nach einem der Ansprüche 1 bis 22 und ein Vernetzungsmittel durch Extrusion auf ein Substrat aufgebracht werden, gefolgt von einer Behandlung unter Vernetzungsbedingungen.

**31.** Verfahren nach Anspruch 30, wobei das ungesättigte Polyolefin, zumindest einer der Ether- und/oder Estergruppen enthaltenden Zusätze und ein oder mehrere Antioxidantien und ein Vernetzungsmittel, gegebenenfalls in Kombination mit einem Versengungshemmstoff und/oder einem Vernetzungsbeschleuniger, in einem einzigen Schritt gemischt werden, gefolgt vom Einführen des erhaltenen Gemischs in den Extruder.

**32.** Verfahren nach Anspruch 30, wobei die vernetzbare Polymerzusammensetzung zuerst mit einem Versengungshemmstoff und/oder einen Antioxidans (mehreren Antioxidantien) gemischt wird, gefolgt vom Vermengen des erhaltenen Gemischs mit dem Vernetzungsmittel und Einführen des abschließenden Gemischs in den Extruder.

**33.** Verfahren nach Anspruch 30, wobei das ungesättigte Polyolefin und zumindest einer der Ether- und/oder Estergruppen enthaltende Zusätze zusammen mit dem Antioxidans (den Antioxidantien) in der Schmelze gemischt werden, gegebenenfalls in Kombination mit einem Versengungshemmstoff und/oder einem Vernetzungsbeschleuniger; das Gemisch zu Granulat geformt wird; und dem Granulat vor oder während der Extrusion ein Vernetzungsmittel und gegebenenfalls ein Versengungshemmstoff und/oder ein Vernetzungsbeschleuniger zugesetzt werden.

**34.** Verfahren nach Anspruch 30, wobei eine Schmelze des ungesättigten Polyolefins im Extruder bereitgestellt wird, gefolgt von der Zugabe von zumindest einem der Ether- und/oder Estergruppen enthaltenden Zusätze, einem Antioxidans (mehreren Antioxidantien), dem Vernetzungsmittel und gegebenenfalls einem Versengungshemmstoff und/oder einem Vernetzungsbeschleuniger im Trichter oder in die Schmelze, entweder gleichzeitig oder in aufeinanderfolgenden Schritten.

**Revendications**

**1.** Composition de polymère réticulable, comprenant

(i) une poly(oléfine) insaturée présentant une quantité totale de doubles liaisons carbone-carbone pour 1 000 atomes de carbone de plus de 0,37 d'après la norme ASTMD 3124-72, où la ligne de base est tracée de 980 $cm^{-1}$ à environ 840 $cm^{-1}$ et les hauteurs de pic sont déterminées à environ 888 $cm^{-1}$ pour le vinylidène, environ 910 $cm^{-1}$ pour le vinyle et environ 965 $cm^{-1}$ pour le trans-vinylène, et

(ii) au moins un additif contenant un groupe éther et/ou ester choisi dans le groupe constitué par le poly(éthylène glycol), un composé ester de glycérol, le poly(propylène glycol), un ester d'acide gras contenant un groupe amido, du pentaérythritol éthoxylé et/ou propoxylé, un ester d'alpha-tocophérol, un acide gras éthoxylé et/ou propoxylé, et leurs dérivés.

**2.** Composition de polymère selon la revendication 1, dans laquelle la poly(oléfine) insaturée présente une quantité totale de doubles liaisons carbone-carbone pour 1 000 atomes de carbone d'au moins 0,45 d'après la norme ASTMD 3124-72, où la ligne de base est tracée de 980 $cm^{-1}$ à environ 840 $cm^{-1}$ et les hauteurs de pic sont déterminées à environ 888 $cm^{-1}$ pour le vinylidène, environ 910 $cm^{-1}$ pour le vinyle et environ 965 $cm^{-1}$ pour le trans-vinylène.

**3.** Composition de polymère selon la revendication 1 ou la revendication 2, dans laquelle au moins certaines des doubles liaisons carbone-carbone sont des groupes vinyle.

**4.** Composition de polymère selon la revendication 3, dans laquelle la poly(oléfine) insaturée présente une quantité totale de groupes vinyle pour 1 000 atomes de carbone de plus de 0,11 d'après la norme ASTMD 3124-72, où la base est tracée de 980 $cm^{-1}$ à environ 840 $cm^{-1}$ et les hauteurs de pic sont déterminées à environ 910 $cm^{-1}$ pour le vinyle.

**5.** Composition de polymère selon l'une des revendications précédentes, dans laquelle la poly(oléfine) insaturée est

préparée par copolymérisation d'un monomère d'oléfine et d'au moins un comonomère polyinsaturé.

6. Composition de polymère selon la revendication 5, dans laquelle la poly(oléfine) insaturée présente une quantité de groupes vinyle pour 1 000 atomes de carbone, qui proviennent du comonomère polyinsaturé, d'au moins 0,03.

7. Composition de polymère selon la revendication 5 ou la revendication 6, dans laquelle au moins un comonomère polyinsaturé est un diène.

8. Composition de polymère selon la revendication 7, dans laquelle le diène est choisi parmi le 1,7-octadiène, le 1,9-décadiène, le 1,11-dodécadiène, le 1,13-tétradécadiène, le 7-méthyl-1,6-octadiène, le 9-méthyl-1,8-décadiène ou leurs mélanges.

9. Composition de polymère selon la revendication 7, dans laquelle le diène est choisi parmi les siloxanes répondant à la formule suivante :

$$CH_2=CH-[Si(CH_3)_2-O]_n-Si(CH_3)_2-CH=CH_2,$$

dans laquelle n = 1 ou plus.

10. Composition de polymère selon l'une des revendications 5 à 9, dans laquelle le monomère d'oléfine est l'éthylène.

11. Composition de polymère selon la revendication 10, dans laquelle le poly(éthylène) insaturé est produit par polymérisation par radicaux à haute pression.

12. Composition de polymère selon la revendication 10 ou 11, dans laquelle le poly(éthylène) insaturé comprend en outre des motifs dérivés de comonomères d'alpha-oléfine en $C_3$ à $C_{20}$.

13. Composition de polymère selon l'une des revendications précédentes, dans laquelle la poly(oléfine) insaturée comprend des motifs polaires dérivés de comonomères d'acrylate, de méthacrylate ou d'acétate de vinyle, ou de leurs mélanges.

14. Composition de polymère selon l'une des revendications précédentes, dans laquelle les comonomères d'acrylate sont choisis parmi l'acrylate de méthyle, l'acrylate d'éthyle, l'acrylate de propyle, l'acrylate de butyle, ou leurs mélanges.

15. Composition de polymère selon la revendication 13 ou la revendication 14, dans laquelle la quantité de motifs dérivés du comonomère polaire est inférieure à 150 micromoles par gramme de poly(oléfine) insaturée.

16. Composition de polymère selon l'une des revendications précédentes, dans laquelle l'additif contenant le groupe éther et/ou ester est le poly(éthylène glycol) et/ou le composé d'ester de glycérol.

17. Composition de polymère selon l'une des revendications précédentes, dans laquelle le composé d'ester de glycérol répond à la formule suivante :

$$Fl^1O[C_3H_5(OR^2)O]_nR^3$$

dans laquelle n ≥ 1,
$R^1$, $R^2$ et $R^3$, qui peuvent être identiques ou différents, sont un atome d'hydrogène ou le résidu d'un acide carboxylique, à condition qu'il existe au moins deux groupes OH libres et au moins un résidu d'un acide carboxylique dans le composé ester de glycérol.

18. Composition de polymère selon la revendication 17, dans laquelle le résidu d'acide carboxylique comporte 8 à 24 atomes de carbone.

19. Composition de polymère selon la revendication 17 ou 18, dans laquelle le composé d'ester de glycérol est présent dans une quantité de 0,05 à 2 % en poids, sur la base du poids de la composition de polymère réticulable.

20. Composition de polymère selon l'une des revendications précédentes, dans laquelle le poly(éthylène glycol) présente

une masse moléculaire moyenne en nombre de 1 000 à 50 000.

**21.** Composition de polymère selon la revendication 20, dans laquelle le poly(éthylène glycol) est présent dans une quantité de 0,05 à 5 % en poids, sur la base du poids de la composition de polymère réticulable.

**22.** Composition de polymère selon l'une des revendications précédentes, comprenant en outre un copolymère polaire préparé par copolymérisation d'un monomère d'oléfine et d'un comonomère polaire.

**23.** Composition de polymère réticulée, obtenue par traitement de la composition de polymère réticulable selon l'une des revendications 1 à 22 dans des conditions de réticulation.

**24.** Composition de polymère réticulée selon la revendication 23, présentant une valeur d'allongement permanent à chaud, inférieure à 175 %, déterminée selon la norme IEC 60811-2-1.

**25.** Composition de polymère réticulée selon la revendication 23 ou 24, présentant une résistance à la rupture électrique d'au moins 50 kV/mm après 1 000 h de vieillissement humide à une température de bain d'eau de 70 °C et une température de conducteur de 85 °C et une contrainte électrique de 9 kV/mm.

**26.** Procédé de préparation d'une composition de polymère réticulée, dans lequel la composition de polymère réticulable selon l'une des revendications 1 à 22 est mélangée avec un agent de réticulation, et le mélange est traité dans des conditions de réticulation.

**27.** Article multicouche réticulable, dans lequel au moins une couche comprend la composition de polymère réticulable selon l'une des revendications 1 à 22.

**28.** Article multicouche réticulé, dans lequel au moins une couche comprend la composition de polymère réticulée selon l'une des revendications 23 à 25.

**29.** Article multicouche réticulé selon la revendication 28, qui est un câble d'alimentation.

**30.** Procédé de préparation d'un dispositif multicouche réticulé, dans lequel la composition de polymère réticulable selon l'une des revendications 1 à 22 et un agent de réticulation sont appliqués sur un substrat par extrusion, puis traités dans des conditions de réticulation.

**31.** Procédé selon la revendication 30, dans lequel la poly(oléfine) insaturée, au moins l'un des additifs contenant un groupe éther et/ou ester, et un ou plusieurs antioxydants ainsi qu'un agent de réticulation, facultativement en combinaison avec un retardateur de vulcanisation prématurée et/ou un intensificateur de réticulation, sont mélangés en une seule étape, puis le mélange obtenu est chargé dans l'extrudeuse.

**32.** Procédé selon la revendication 30, dans lequel la composition de polymère réticulable est mélangée avec un retardateur de vulcanisation prématurée et/ou un ou plusieurs antioxydants en premier, puis le mélange obtenu est mélangé avec l'agent de réticulation, et le mélange final est chargé dans l'extrudeuse.

**33.** Procédé selon la revendication 30, dans lequel la poly(oléfine) insaturée et au moins l'un des additifs contenant un groupe éther et/ou ester, conjointement avec le ou les antioxydants sont mélangés à l'état fondu, facultativement en combinaison avec un retardateur de vulcanisation prématurée et/ou un intensificateur de réticulation ; le mélange est mis en forme de pastilles ; et un agent de réticulation et facultativement un retardateur de vulcanisation prématurée et/ou un intensificateur de réticulation sont ajoutés aux pastilles avant ou pendant l'extrusion.

**34.** Procédé selon la revendication 30, dans lequel un produit fondu de la poly(oléfine) insaturée est chargé dans l'extrudeuse, puis au moins l'un des additifs contenant un groupe éther et/ou ester, un ou des antioxydants, l'agent de réticulation et facultativement un retardateur de vulcanisation prématurée et/ou un intensificateur de réticulation sont ajoutés dans la trémie ou au produit fondu, simultanément ou dans des étapes ultérieures.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4305849 A
- US 4812505 A
- WO 9931675 A
- WO 8505216 A
- WO 3413707 A
- WO 9308222 A
- WO 9212182 A


### Non-patent literature cited in the description


- **LAND H.G. ; SCHÄDLICH H.** Model Cable Test for Evaluating the Ageing Behaviour under Water Influence of Compounds for Medium Voltage Cables. *Conference Proceedings of Jicable 91,* 24 June 1991